# EUROPEAN PATENT SPECIFICATION

(11) **EP 4 368 934 B1**
(45) Date of publication and mention of the grant of the patent: **30.07.2025**
(21) Application number: 23209151.2
(22) Date of filing: 10.11.2023
(51) Int. Cl.: F28F 9/02, F28D 21/00

(54) **ONCE-THROUGH HEAT EXCHANGER AND COMBINED POWER GENERATION SYSTEM INCLUDING THE SAME**
EINMALDURCHLAUFWÄRMETAUSCHER UND KOMBINIERTES STROMERZEUGUNGSSYSTEM DAMIT
ÉCHANGEUR DE CHALEUR À PASSAGE UNIQUE ET SYSTÈME DE PRODUCTION D'ÉNERGIE COMBINÉ LE COMPRENANT

(30) Priority: 14.11.2022 KR 20220151966
(43) Date of publication of application: 15.05.2024
(73) Proprietor: Doosan Enerbility Co., Ltd., Seongsan-gu Changwon-si, Gyeongsangnam-do 51711 (KR)
(72) Inventor: KIM, Kyu Man, Busan (KR); KIM, Uk, Changwon-si (KR); KIM, Jae Cheol, Busan (KR); KIM, Min Su, Gimhae-si (KR); SON, Jung Ah, Changwon-si (KR); LEE, Young Wook, Changwon-si (KR); HONG, Jong Ho, Changwon-si (KR)
(74) Representative: Ter Meer Steinmeister & Partner

(56) References cited:
- EP-A1- 2 573 449
- WO-A2-2011/092317
- GB-A- 1 389 904
- US-A- 4 473 035
- US-A1- 2009 173 072
- US-A1- 2013 048 245

## Description

### BACKGROUND

### Technical Field

Exemplary embodiments relate to a once-through heat exchanger and a combined power generation system including the same.

### Related Art

A gas turbine is a power engine that mixes air compressed by a compressor with fuel for combustion and rotates a turbine with hot gas produced by the combustion. The gas turbine is used to drive a generator, an aircraft, a ship, a train, etc.

A heat recovery steam generator (HRSG) is an energy recovery device that recovers heat from a hot gas stream to produce steam that is usable to drive a steam turbine (combined cycle). The HRSG typically includes four main components: an economizer, an evaporator, a superheater and a preheater.

In particular, a natural circulation HRSG includes piping to facilitate a proper rate of circulation within an evaporator tube, as well as evaporator heating surfaces and drums. A once-through HRSG includes a once-through evaporator that replaces a natural circulation component, thereby providing higher facility efficiency on site and further assisting in extending HRSG life in the absence of thick wall drums. A steam generator according to the preamble of claim 1 is disclosed in GB 1 389 904 A.

In the case of supercritical pressure vertical once-through HRSGs, it is difficult to ensure structural stability due to severe thermal expansion of an outlet head of a final superheater. Heating and thermal expansion of the outlet head by steam heated to a high temperature distorts tube arrangement and concentrates thermal stress, resulting in a high risk of breakage.

### SUMMARY

Aspects of one or more exemplary embodiments provide a once-through heat exchanger, a heat recovery steam generator, and a combined power generation system including the same, which are capable of minimizing damage caused by thermal expansion.

Additional aspects will be set forth in part in the description which follows and, in part, will become apparent from the description, or may be learned by practice of the exemplary embodiments.

According to the invention, there is provided a heat exchanger according claim 1, in particular a once-through heat exchanger, that includes a tube stack including a plurality of tubes, a plurality of heads connected to the tube stack and configured to accommodate heated steam, a connector module configured to connect the tubes and the heads and including a plurality of tube connectors, a manifold connected to the heads and configured to accommodate heated steam, and a plurality of link pipes configured to connect the heads and the manifold, and the connector module includes a first tube connector and a second tube connector having different shapes.

The heads are spaced at different distances from the manifold.

The heads adjacent to each other in a longitudinal direction of the manifold may be spaced at different distances from the manifold.

The first tube connector may include a first connection part connected to associated ones of the heads. The second tube connector may include a second connection part connected to associated ones of the heads. The first connection part may have a smaller length than the second connection part.

The first connection part and the second connection part may be formed in parallel.

The first tube connector may further include a first extension part extending in a longitudinal direction of the link pipes from the first connection part. The first tube connector may further include a first intermediate part extending in a longitudinal direction of the first connection part from the first extension part. The first tube connector may further include a first tip part extending in a longitudinal direction of the first extension part from the first intermediate part.

The second tube connector may further include a second tip part extending in the longitudinal direction of the link pipes from the second connection part.

The connector module may further include a third tube connector having a different shape from the second tube connector. The third tube connector may include a third connection part connected to associated ones of the heads. The third connection part may have a larger length than the second connection part.

The third tube connector may further include a third extension part extending in the longitudinal direction of the link pipes from the third connection part. The third tube connector may further include an inclined part extending obliquely from the third extension part. The third tube connector may further include a third tip part extending in a longitudinal direction of the third extension part from the inclined part.

According to an aspect of another exemplary embodiment, there is provided a combined power generation system that includes a gas turbine configured to generate rotational force by burning fuel, a heat recovery steam generator configured to heat water using combustion gas discharged from the gas turbine and including a high-pressure section, a medium-pressure section, and a low-pressure section having different levels of pressure, and a steam turbine using steam heated by the heat recovery steam generator. The heat recovery steam generator includes a plurality of heat exchangers. Each of the heat exchangers includes a tube stack including a plurality of tubes, a plurality of heads connected to the tube stack and configured to accommodate heated steam, a connector module configured to connect the tubes and the heads and including a plurality of tube connectors, a manifold connected to the heads and configured to accommodate heated steam, and a plurality of link pipes configured to connect the heads and the manifold, and the connector module includes a first tube connector and a second tube connector having different shapes.

The heads may be spaced at different distances from the manifold.

The heads adjacent to each other in a longitudinal direction of the manifold may be spaced at different distances from the manifold.

The first tube connector may include a first connection part connected to associated ones of the heads, the second tube connector may include a second connection part connected to associated ones of the heads, and the first connection part may have a smaller length than the second connection part.

The first connection part and the second connection part may be formed in parallel.

The first tube connector may further include a first extension part extending in a longitudinal direction of the link pipes from the first connection part, a first intermediate part extending in a longitudinal direction of the first connection part from the first extension part, and a first tip part extending in a longitudinal direction of the first extension part from the first intermediate part.

The second tube connector may further include a second tip part extending in the longitudinal direction of the link pipes from the second connection part.

The connector module may further include a third tube connector having a different shape from the second tube connector, the third tube connector may include a third connection part connected to associated ones of the heads, and the third connection part may have a larger length than the second connection part.

The third tube connector may further include a third extension part extending in the longitudinal direction of the link pipes from the third connection part, an inclined part extending obliquely from the third extension part, and a third tip part extending in a longitudinal direction of the third extension part from the inclined part.

It is to be understood that both the foregoing general description and the following detailed description of exemplary embodiments are exemplary and explanatory and are intended to provide further explanation of the disclosure as claimed.

### BRIEF DESCRIPTION OF THE DRAWINGS

The above and other aspects will become more apparent from the following description of the exemplary embodiments with reference to the accompanying drawings, in which:
FIG. 1 is a configuration diagram illustrating a combined power generation system according to a first exemplary embodiment;
FIG. 2 is a configuration diagram illustrating a heat recovery steam generator according to the first exemplary embodiment;
FIG. 3 is a perspective view illustrating a heat exchanger according to the first exemplary embodiment;
FIG. 4 is a top view illustrating the heat exchanger according to the first exemplary embodiment;
FIG. 5 is a side view illustrating a first tube connector according to the first exemplary embodiment;
FIG. 6 is a side view illustrating a second tube connector according to the first exemplary embodiment;
FIG. 7 is a perspective view illustrating a heat exchanger according to a second exemplary embodiment;
FIG. 8 is a side view illustrating a third tube connector according to the second exemplary embodiment;
FIG. 9 is a perspective view illustrating a heat exchanger according to a third exemplary embodiment; and
FIG. 10 is a perspective view illustrating a heat exchanger according to a fourth exemplary embodiment.

### DETAILED DESCRIPTION

Various modifications and different embodiments will be described below in detail with reference to the accompanying drawings so that those skilled in the art can easily carry out the disclosure. It should be understood, however, that the present disclosure is not intended to be limited to the specific embodiments, but the present disclosure includes all modifications, equivalents or replacements that fall within the spirit and scope of the disclosure as defined in the following claims.

The terminology used herein is for the purpose of describing specific embodiments only and is not intended to limit the scope of the disclosure. As used herein, the singular forms "a", "an" and "the" are intended to include the plural forms as well, unless the context clearly indicates otherwise. In the disclosure, terms such as "comprises", "includes", or "have/has" should be construed as designating that there are such features, integers, steps, operations, components, parts, and/or combinations thereof, not to exclude the presence or possibility of adding of one or more of other features, integers, steps, operations, components, parts, and/or combinations thereof.

Exemplary embodiments will be described below in detail with reference to the accompanying drawings. It should be noted that like reference numerals refer to like parts throughout various drawings and exemplary embodiments. In certain embodiments, a detailed description of functions and configurations well known in the art may be omitted to avoid obscuring appreciation of the disclosure by those skilled in the art. For the same reason, some components may be exaggerated, omitted, or schematically illustrated in the accompanying drawings.

Hereinafter, a combined power generation system according to a first exemplary embodiment will be described.

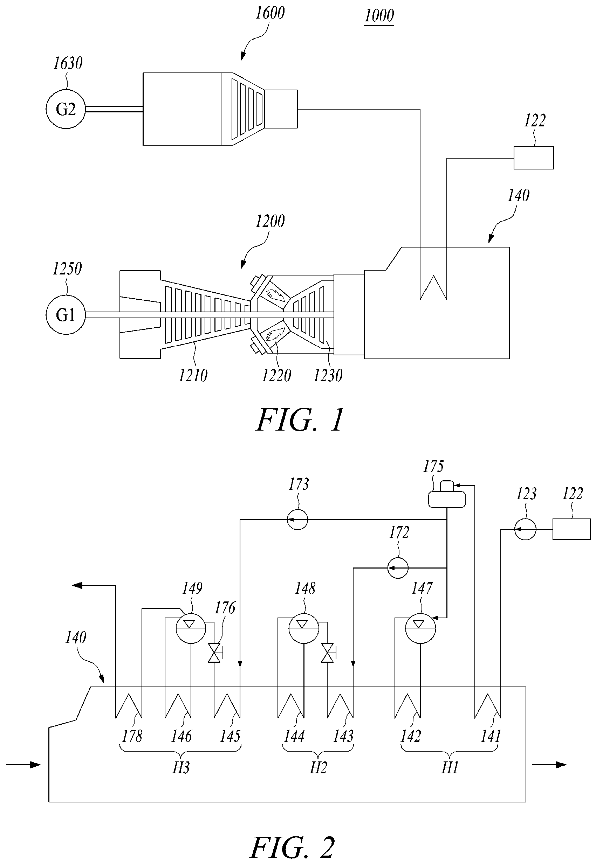

FIG. 1 is a configuration diagram illustrating the combined power generation system according to the first exemplary embodiment. FIG. 2 is a configuration diagram illustrating a heat recovery steam generator according to the first exemplary embodiment.

Referring to FIGS. 1 and 2, the combined power generation system, which is designated by reference numeral 1000, according to the first exemplary embodiment may include a gas turbine 1200, a steam turbine 1600, a first generator G1, a second generator G2, and a heat recovery steam generator 140.

In the gas turbine 1200, thermal energy may be released by combustion of fuel in an isobaric environment after atmospheric air is sucked and compressed to a high pressure, hot combustion gas may be expanded to be converted into kinetic energy, and exhaust gas with residual energy may then be discharged to the atmosphere.

The gas turbine 1200 may include a compressor 1210, a combustor 1220, and a main turbine 1230. The compressor 1210 of the gas turbine 1200 may suck air from the outside and compress the air. The compressor 1210 may supply the combustor 1220 with the air compressed by compressor blades and may also supply cooling air to a hot region required for cooling in the gas turbine 1200.

Meanwhile, the combustor 1220 may mix the compressed air, which is supplied from the outlet of the compressor 1210, with fuel for isobaric combustion to produce combustion gas with high energy.

The high-temperature and high-pressure combustion gas produced by the combustor 1220 is supplied to the main turbine 1230. In the main turbine 1230, the combustion gas applies impingement or reaction force to a plurality of turbine blades radially disposed on the rotary shaft of the main turbine 1230 while expanding adiabatically, so that the thermal energy of the combustion gas is converted into mechanical energy for rotating the rotary shaft. Some of the mechanical energy obtained from the main turbine 1230 is supplied as energy required to compress the air in the compressor 1210, and the rest is utilized as effective energy, such as for driving the first generator G1 to generate electric power.

After the combustion gas flowing out of the main turbine 1230 is cooled through the heat recovery steam generator 140, it is purified and discharged to the outside. The heat recovery steam generator 140 not only cools the combustion gas, but also produces high-temperature and high-pressure steam using the heat of the combustion gas to deliver the steam to the steam turbine 1600.

The steam turbine 1600 rotates the blades thereof using the steam produced by the heat recovery steam generator 140 and transfers rotational energy to the second generator G2. The steam turbine 1600 supplies cooled steam back to the heat recovery steam generator 140.

The first generator G1 may be connected to the gas turbine 1200 and the second generator G2 may be connected to the steam turbine 1600 so as to generate electric power. However, the present disclosure is not limited thereto, and a single generator may be connected to the gas turbine 1200 and the steam turbine 1600.

The combined power generation system may be equipped with a condenser 121 for condensing steam, a condensate reservoir 122 for storing condensed water, and a condensate pump 123 for supplying the heat recovery steam generator 140 with the condensed water stored in the condensate reservoir 122.

The steam flowing in the heat recovery steam generator 140 may have two or three levels of pressure, so that the water is pressurized to two or three or more levels of pressure. In the exemplary embodiment, the heat recovery steam generator 140 is exemplified as having three levels of pressure.

The heat recovery steam generator 140 may include a low-pressure section H1 having a relatively low pressure, a medium-pressure section H2 having a medium pressure, and a high-pressure section H3 having a relatively high pressure. The high-pressure section H3 may be disposed adjacent to an inlet for introduction of combustion gas therethrough and be heated by high-temperature combustion gas. The low-pressure section H1 may be disposed adjacent to an outlet for discharge of combustion gas therethrough and be heated by low-temperature combustion gas.

The heat recovery steam generator 140 includes a condensate preheater 141, a low-pressure evaporator 142, a medium-pressure economizer 143, a medium-pressure evaporator 144, a high-pressure economizer 145, and a high-pressure evaporator 146, which are installed therein. In addition, an additional superheater (not shown) may be installed upstream of each evaporator. The combustion gas flowing out of the heat recovery steam generator 140 may be discharged via a stack.

The low-pressure section H1 includes a condensate preheater 141, a low-pressure evaporator 142, and a low-pressure drum 147. The condensed water stored in the condensate reservoir 122 is delivered to the condensate preheater 141 by the condensate pump 123. The condensate preheater 141 heats the condensed water by exchanging heat with combustion gas. The water heated by the condensate preheater 141 is delivered to a deaerator 175 so that gas is removed from the condensed water.

Water is supplied from the deaerator 175 to the low-pressure drum 147. The low-pressure evaporator 142 may be connected to the low-pressure drum 147, so that the water stored in the low-pressure drum 147 is converted into steam by heating and the steam is then supplied to the superheater after steam-water separation in the low-pressure drum 147.

The medium-pressure section H2 includes a medium-pressure economizer 143, a medium-pressure evaporator 144, and a medium-pressure drum 148. The water in the deaerator 175 is supplied to the medium-pressure economizer 143 by a medium-pressure pump 172. The medium-pressure economizer 143 heats the water by exchanging heat with combustion gas. The water heated in the medium-pressure economizer 143 is supplied to the low-pressure drum 148. The medium-pressure evaporator 144 may be connected to the medium-pressure drum 148, so that the water stored in the medium-pressure drum 148 is converted into steam by heating and the steam is then supplied to the superheater after steam-water separation in the medium-pressure drum 148.

The high-pressure section H3 includes a high-pressure economizer 145, a high-pressure evaporator 146, a high-pressure drum 149, and a high-pressure superheater 178. The water in the deaerator 175 is supplied to the high-pressure economizer 145 by a high-pressure pump 173. The high-pressure economizer 145 heats the water by exchanging heat with combustion gas. The water heated in the high-pressure economizer 145 is supplied to the high-pressure drum 149. The high-pressure evaporator 146 may be connected to the high-pressure drum 149, so that the water stored in the high-pressure drum 149 is converted into steam by heating and the steam is then supplied to the high-pressure superheater 178 after steam-water separation in the high-pressure drum 149.

The steam stored in the low-pressure drum 147, the medium-pressure drum 148, and the high-pressure drum 149 may be supplied to low-pressure, medium-pressure, and high-pressure steam turbines, respectively.

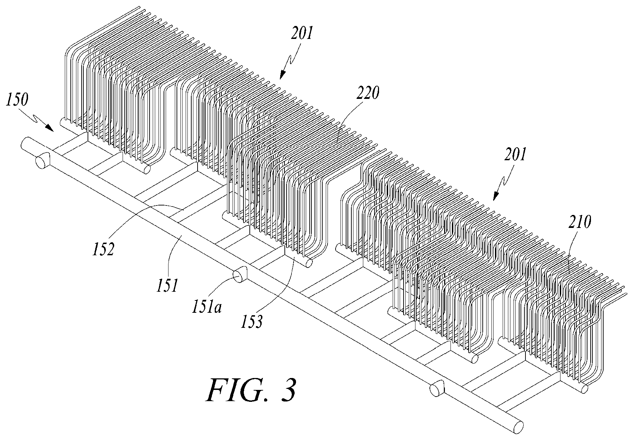

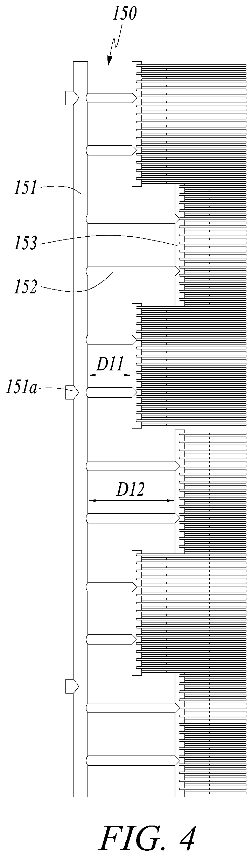

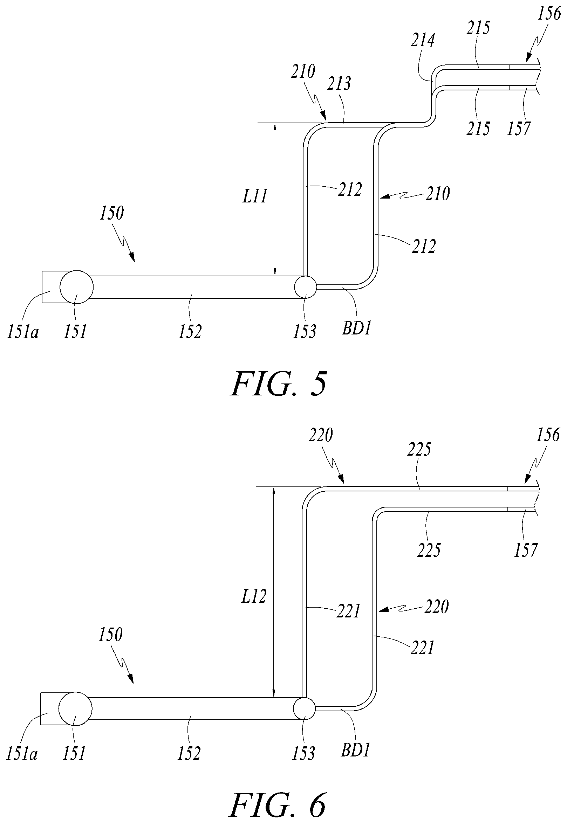

FIG. 3 is a perspective view illustrating a heat exchanger according to the first exemplary embodiment. FIG. 4 is a top view illustrating the heat exchanger according to the first exemplary embodiment. FIG. 5 is a side view illustrating a first tube connector according to the first exemplary embodiment. FIG. 6 is a side view illustrating a second tube connector according to the first exemplary embodiment.

Referring to FIGS. 3 to 6, the heat exchanger, which is designated by reference numeral 150, according to the present embodiment may be a once-through heat exchanger, and in particular, a vertical once-through heat exchanger applied to the heat recovery steam generator 140. Alternatively, the heat exchanger 150 may be the high-pressure superheater 178 of the high-pressure section H3.

The heat exchanger 150 may include a tube stack 156, a connector module 201, a plurality of heads 153, a plurality of link pipes 152, and a manifold 151. The tube stack 156 includes a plurality of tubes 157 and serves to overheat steam by exchanging heat with heated combustion gas. The tubes 157 may be connected in a straight line, and the steam flowing along the tube stack 156 may be heated by high-temperature combustion gas.

The connector module 201 connects the tubes 157 and the heads 153 and includes a plurality of tube connectors 210 and 220. The tube connectors 210 and 220 may be composed of pipes each having a passage through which steam flows, and may each have a multiple curved structure. The tube connectors 210 and 220 may have a greater thickness than tubes 157.

The heads 153 are connected to the connector module 201 and accommodate steam delivered from the connector module 201. Each of the heads 153 is a pipe that extends parallel to the manifold 151 and has both longitudinal ends blocked.

The heads 153 are arranged in the longitudinal direction thereof and spaced at different distances from the manifold 151. That is, one head 153 may be spaced apart from the manifold 151 by a first distance D11, and another head 153 may be spaced apart from the manifold 151 by a second distance D12 greater than the first distance D11. In particular, the heads 153 adjacent to each other in the longitudinal direction of the manifold 151 are spaced at different distances from the manifold 151.

The link pipes 152 may connect the heads 153 and the manifold 151. In addition, the manifold 151 and any one of the heads 153 may be connected by two link pipes 152. The link pipes 152 may each have a thickness greater than that of the connector module 201.

The manifold 151 may be a long pipe, and the heads are connected to the manifold through the link pipes. The manifold 151 may have a plurality of connection pipes 151a formed for introduction or discharge of steam.

Meanwhile, the connector module 201 may include a first tube connector 210 and a second tube connector 220 having different shapes. One head 153 may be connected to both the first tube connector 210 and the second tube connector 220, and some other heads 153 may be connected to only the first tube connector 210. The other heads 153 may also be connected to only the second tube connector 220.

The first tube connector 210 may include a first connection part 212 connected to associated ones of the heads 153, a first extension part 213 extending in the longitudinal direction of the link pipes 152 from the first connection part 212, a first intermediate part 214 extending in the longitudinal direction of the first connection part 212 from the first extension part 213, and a first tip part 215 extending in the longitudinal direction of the first extension part 213 from the first intermediate part 214. The first tip part 215 is connected to associated ones of the tubes 157.

Meanwhile, the first tube connector 210 may further include a bent part BD1 connected to the side ends of the associated heads 153, and the first connection part 212 may be connected to the associated heads 153 via the bent part BD1.

The second tube connector 220 may include a second connection part 221 connected to associated ones of the heads 153, and a second tip part 225 extending in the longitudinal direction of the link pipes 152 from the second connection part 221. Meanwhile, the second tube connector 220 may further include a bent part BD1 connected to the side ends of the associated heads 153, and the second connection part 221 may be connected to the associated heads 153 via the bent part BD1.

Here, the first connection part 212 and the second connection part 221 may be formed in parallel, and the length L11 of the first connection part 212 may be smaller than the length L12 of the second connection part 221.

As in the first exemplary embodiment, if the adjacent heads 153 are spaced at different distances from the manifold 151, it is possible to absorb an amount of deformation when the tubes 157, the heads 153, and the manifold 151 are deformed by steam. In addition, if the first and second tube connectors 210 and 220 have different shapes and the first connection part 212 has a smaller length than the second connection part 221, it is possible to minimize deformation of the arrangement of the tubes 157 caused by thermal deformation or damage to the piping caused by thermal stress.

Hereinafter, a heat exchanger according to a second exemplary embodiment will be described.

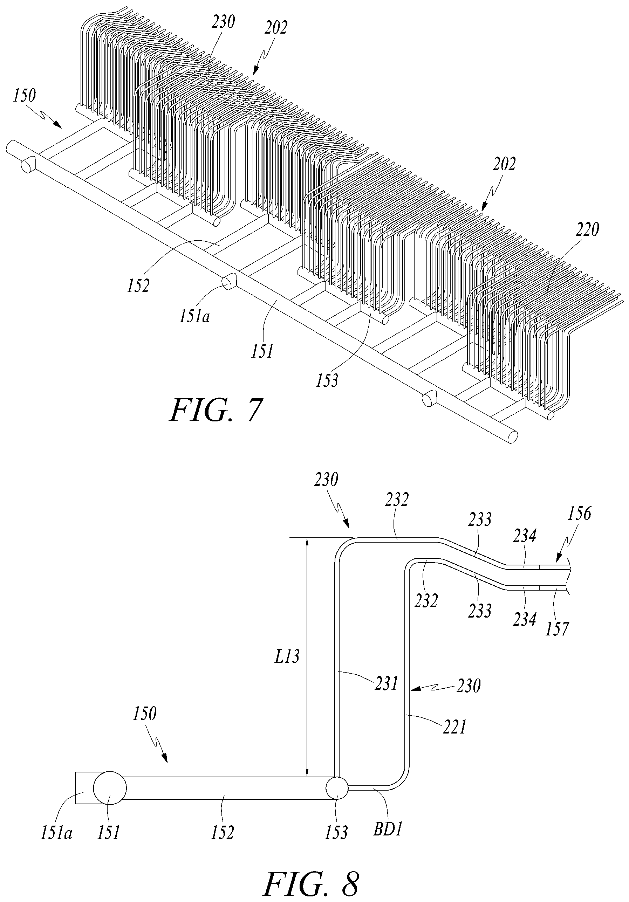

FIG. 7 is a perspective view illustrating the heat exchanger according to the second exemplary embodiment. FIG. 8 is a side view illustrating a third tube connector according to the second exemplary embodiment.

Referring to FIGS. 7 and 8, the heat exchanger, which is designated by reference numeral 150, according to the second exemplary embodiment may include a tube stack 156, a connector module 202, a plurality of heads 153, a plurality of link pipes 152, and a manifold 151.

Since the heat exchanger 150 according to the second exemplary embodiment has the same structure as the heat exchanger according to the first exemplary embodiment, with the sole exception of the connector module 202, a redundant description thereof will be omitted.

The connector module 202 connects the tubes 157 and the heads 153 and includes a plurality of tube connectors 220 and 230. In addition, the connector module 202 may include a second tube connector 220 and a third tube connector 230 having different shapes. The second tube connector 220 and the third tube connector 230 may be connected to different heads.

The third tube connector 230 may include a third connection part 231 connected to associated ones of the heads 153, a third extension part 232 extending in the longitudinal direction of the link pipes from the third connection part 231, an inclined part 233 extending obliquely from the third extension part 232, and a third tip part 234 extending in the longitudinal direction of the third extension part 232 from the inclined part 233. The third tip part 234 is connected to associated ones of the tubes 157.

Meanwhile, the third tube connector 230 may further include a bent part BD1 connected to the side ends of the associated heads 153, and the third connection part 231 may be connected to the associated heads via the bent part BD1.

Here, the third connection part 231 and the second connection part 221 may be formed in parallel, and the length L13 of the third connection part 231 may be larger than the length L12 of the second connection part 221.

As in the second exemplary embodiment, if the second and third tube connectors 220 and 230 have different shapes and the second connection part 221 has a smaller length than the third connection part 231, it is possible to reliably prevent the tubes 157 from being broken due to thermal deformation.

Hereinafter, a heat exchanger according to a third exemplary embodiment will be described.

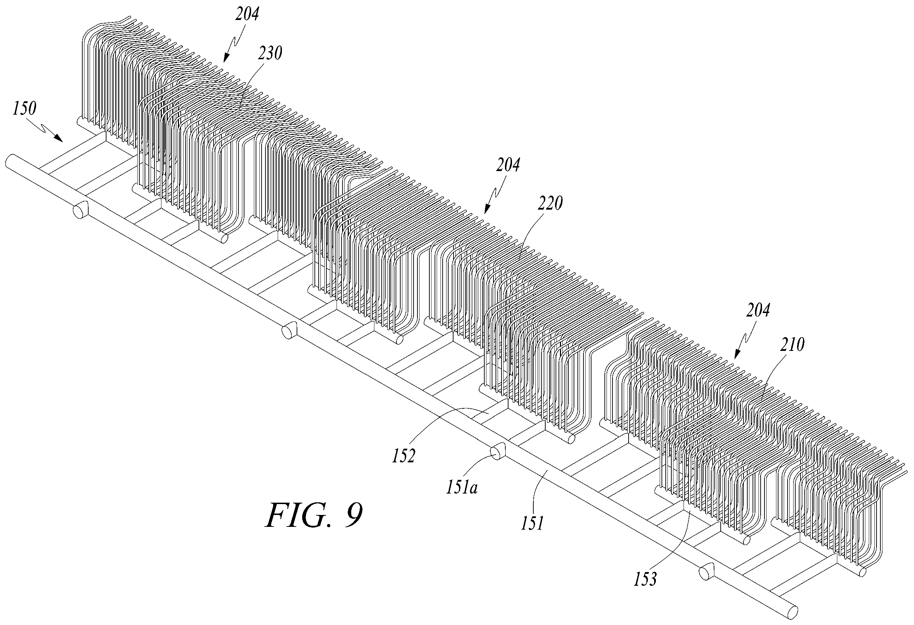

FIG. 9 is a perspective view illustrating the heat exchanger according to the third exemplary embodiment.

Referring to FIG. 9, the heat exchanger, which is designated by reference numeral 150, according to the third exemplary embodiment may include a tube stack 156, a connector module 204, a plurality of heads 153, a plurality of link pipes 152, and a manifold 151.

Since the heat exchanger 150 according to the third exemplary embodiment has the same structure as the heat exchanger according to the first exemplary embodiment, with the sole exception of the connector module 204, a redundant description thereof will be omitted.

The connector module 204 connects the tubes 157 and the heads 153 and includes a plurality of tube connectors 210, 220, and 230. In addition, the connector module 204 may include a first tube connector 210, a second tube connector 220, and a third tube connector 230 having different shapes. The first tube connector 210 and the second tube connector 220 may be connected to the same head or different heads 153. Meanwhile, the third tube connector 230 may be connected to heads 153 different from those connected to the first and second tube connectors 210 and 220.

The first and second tube connectors 210 and 220 according to the third exemplary embodiment may have the same structure as the first and second tube connectors 210 and 220 of the above-mentioned first exemplary embodiment. The third tube connector 230 according to the third exemplary embodiment may have the same structure as the third tube connector 230 of the second exemplary embodiment.

As in the third exemplary embodiment, if the first, second, and third tube connectors 210, 220, and 230 have different shapes, the first connection part 212 has a smaller length than the second connection part 221, and the second connection part 221 has a smaller length than the third connection part 231, it is possible to reliably prevent the tubes from being broken due to thermal deformation.

Hereinafter, a heat exchanger according to a fourth exemplary embodiment will be described.

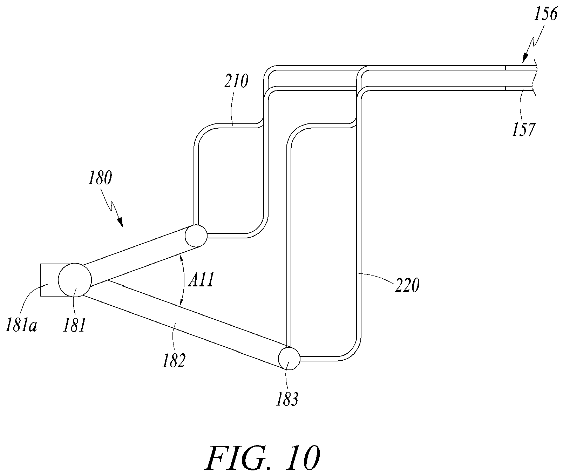

FIG. 10 is a perspective view illustrating the heat exchanger according to the fourth exemplary embodiment.

Referring to FIG. 10, the heat exchanger, which is designated by reference numeral 180, according to the fourth exemplary embodiment may include a tube stack 156, a connector module, a plurality of heads 183, a plurality of link pipes 182, and a manifold 181. The manifold 181 may be a long pipe, and may have a plurality of connection pipes 181a formed for introduction or discharge of steam.

Since the heat exchanger 180 according to the fourth exemplary embodiment has the same structure as the heat exchanger according to the first exemplary embodiment, with the sole exception of the link pipes 182, a redundant description thereof will be omitted.

The link pipes 182 may connect the heads 183 and the manifold 181. In addition, the manifold 181 and any one of the heads 183 may be connected by two link pipes 182. The connector module may include a first tube connector 210 and a second tube connector 220, but the present disclosure is not limited thereto.

The link pipes coupled to different heads are formed to have different lengths, and the link pipes having different lengths are arranged obliquely to each other. Some of the link pipes may be inclined upward, while some of the link pipes may be inclined downward.

As in the fourth exemplary embodiment, if the link pipes have different lengths and the link pipes 182 are inclined to each other, it is possible to reliably prevent the tubes from being broken due to thermal deformation.

As is apparent from the above description, the once-through heat exchanger according to the exemplary embodiments can prevent breakage and stress concentration due to thermal deformation since the heads are spaced at different distances from the manifold and the heads and the manifold are connected via the link pipes.

In addition, since the tube connectors constituting the connector module have different shapes, it is possible to minimize deformation of the arrangement of the tubes caused by thermal deformation or damage to the piping caused by thermal stress.

While one or more exemplary embodiments have been described with reference to the accompanying drawings, it will be apparent to those skilled in the art that various variations and modifications may be made by adding, changing, or removing components without departing from the scope of the invention as defined in the appended claims.

## Claims

1. A once-through heat exchanger (150, 180) comprising:
a tube stack (156) comprising a plurality of tubes (157);
a plurality of heads (153, 183) connected to the tube stack (156) and configured to accommodate heated steam;
a connector module (201, 202, 204) configured to connect the tubes (157) and the heads (153, 183) and comprising a plurality of tube connectors (210, 220, 230);
a manifold (151, 181) connected to the heads (153, 183) and configured to accommodate heated steam; and
a plurality of link pipes (152, 182) configured to connect the heads (153, 183) and the manifold (151, 181),
wherein the connector module (201, 202, 204) comprises a first tube connector (210) and a second tube connector (220) having different shapes;
**characterized in that**:
each of the heads (153) is a pipe that extends parallel to the manifold (151) and has both longitudinal ends blocked, and
**in that** the heads (153, 183) are spaced at different distances from the manifold (151, 181).

2. The once-through heat exchanger (150, 180) according to claim 1, wherein the heads (153, 183) adjacent to each other in a longitudinal direction of the manifold (151, 181) are spaced at different distances from the manifold (151, 181).

3. The once-through heat exchanger (150, 180) according to any one of the preceding claims, wherein:
the first tube connector (210) comprises a first connection part (212) connected to associated ones of the heads (153, 183), and the second tube connector (220) comprises a second connection part (221) connected to associated ones of the heads (153, 183); and
the first connection part (212) has a smaller length than the second connection part (221).

4. The once-through heat exchanger (150, 180) according to claim 3, wherein the first connection part (212) and the second connection part (221) are formed in parallel.

5. The once-through heat exchanger (150, 180) according to claim 3 or 4, wherein the first tube connector (210) further comprises a first extension part (213) extending in a longitudinal direction of the link pipes (152, 182) from the first connection part (212), a first intermediate part (214) extending in a longitudinal direction of the first connection part from the first extension part (213), and a first tip part (215) extending in a longitudinal direction of the first extension part (213) from the first intermediate part (214).

6. The once-through heat exchanger (150, 180) according to claim 3, 4 or 5, wherein the second tube connector (220) further comprises a second tip part (225) extending in the longitudinal direction of the link pipes (152, 182) from the second connection part (221).

7. The once-through heat exchanger (150, 180) according to claim 3, 4, 5 or 6, wherein:
the connector module (202) further comprises a third tube connector (230) having a different shape from the second tube connector (220); and
the third tube connector (230) comprises a third connection part (231) connected to associated ones of the heads (153, 183), and the third connection part (231) has a larger length than the second connection part (221).

8. The once-through heat exchanger (150, 180) according to claim 7, wherein the third tube connector (230) further comprises a third extension part (232) extending in the longitudinal direction of the link pipes (152, 182) from the third connection part (231), an inclined part (233) extending obliquely from the third extension part (232), and a third tip part (234) extending in a longitudinal direction of the third extension part (232) from the inclined part (233).

9. A combined power generation system (1000) comprising:
a gas turbine (1200) configured to generate rotational force by burning fuel;
a heat recovery steam generator (140) configured to heat water using combustion gas discharged from the gas turbine (1200) and comprising a high-pressure section (H3), a medium-pressure section (H2), and a low-pressure section (H1) having different levels of pressure; and
a steam turbine (1600) using steam heated by the heat recovery steam generator (140),
wherein the heat recovery steam generator (140) comprises a plurality of once-through heat exchangers (150, 180) according to any one of the preceding claims.

## Patentansprüche

1. Durchlaufwärmetauscher (150, 180), der Folgendes umfasst:
ein Rohrbündel (156), das mehrere Rohre (157) umfasst;
mehrere Köpfe (153, 183), die mit dem Rohrbündel (156) verbunden sind und konfiguriert sind, erhitzten Dampf aufzunehmen;
ein Verbindermodul (201, 202, 204), das konfiguriert ist, die Rohre (157) und die Köpfe (153, 183) zu verbinden, und mehrere Rohrverbinder (210, 220, 230) umfasst;
ein Verteilerrohr (151, 181), das mit den Köpfen (153, 183) verbunden ist und konfiguriert ist, erhitzten Dampf aufzunehmen; und
mehrere Verbindungsrohrleitungen (152, 182), die konfiguriert sind, die Köpfe (153, 183) und das Verteilerrohr (151, 181) zu verbinden,
wobei das Verbindermodul (201, 202, 204) einen ersten Rohrverbinder (210) und einen zweiten Rohrverbinder (220) umfasst, die verschiedene Formen aufweisen;
**dadurch gekennzeichnet, dass**:
jeder der Köpfe (153) eine Rohrleitung ist, die sich parallel zum Verteilerrohr (151) erstreckt, wobei beide Enden in Längsrichtung versperrt sind, und
dass die Köpfe (153, 183) vom Verteilerrohr (151, 181) mit verschiedenen Abständen beabstandet sind.

2. Durchlaufwärmetauscher (150, 180) nach Anspruch 1, wobei die Köpfe (153, 183), die in einer Längsrichtung des Verteilerrohrs (151, 181) zueinander benachbart sind, mit verschiedenen Abständen vom Verteilerrohr (151, 181) beabstandet sind.

3. Durchlaufwärmetauscher (150, 180) nach einem der vorhergehenden Ansprüche, wobei:
der erste Rohrverbinder (210) eine erste Verbindungskomponente (212) umfasst, die mit zugeordneten Köpfen (153, 183) verbunden ist, und der zweite Rohrverbinder (220) eine zweite Verbindungskomponente (221) umfasst, die mit zugeordneten Köpfen (153, 183) verbunden ist, und
die erste Verbindungskomponente (212) eine kleinere Länge als die zweite Verbindungskomponente (221) aufweist.

4. Durchlaufwärmetauscher (150, 180) nach Anspruch 3, wobei die erste Verbindungskomponente (212) und die zweite Verbindungskomponente (221) parallel ausgebildet sind.

5. Durchlaufwärmetauscher (150, 180) nach Anspruch 3 oder 4, wobei der erste Rohrverbinder (210) ferner eine erste Verlängerungskomponente (213), die sich von der ersten Verbindungskomponente (212) in einer Längsrichtung der Verbindungsrohrleitungen (152, 182) erstreckt, eine erste Zwischenkomponente (214), die sich von der ersten Verlängerungskomponente (213) in einer Längsrichtung der ersten Verbindungskomponente erstreckt, und eine erste Endkomponente (215), die sich von der ersten Zwischenkomponente (214) in einer Längsrichtung der ersten Verlängerungskomponente (213) erstreckt, umfasst.

6. Durchlaufwärmetauscher (150, 180) nach Anspruch 3, 4 oder 5, wobei der zweite Rohrverbinder (220) ferner eine zweite Endkomponente (225) umfasst, die sich von der zweiten Verbindungskomponente (221) in der Längsrichtung der Verbindungsrohrleitungen (152, 182) erstreckt.

7. Durchlaufwärmetauscher (150, 180) nach Anspruch 3, 4, 5 oder 6, wobei:
das Verbindermodul (202) ferner eine dritten Rohrverbinder (230) umfasst, der eine vom zweiten Rohrverbinder (220) verschiedene Form aufweist; und
der dritte Rohrverbinder (230) eine dritte Verbindungskomponente (231) umfasst, die mit zugeordneten Kopf (153, 183) verbunden ist, und die dritte Verbindungskomponente (231) eine größere Länge als die zweite Verbindungskomponente (221) aufweist.

8. Durchlaufwärmetauscher (150, 180) nach Anspruch 7, wobei der dritte Rohrverbinder (230) ferner eine dritte Verlängerungskomponente (232), die sich von der dritten Verbindungskomponente (231) in der Längsrichtung der Verbindungsrohrleitungen (152, 182) erstreckt, eine geneigte Komponente (233), die sich von der dritten Verlängerungskomponente (232) schräg erstreckt, und eine dritte Endkomponente (234), die sich von der geneigten Komponente (233) in einer Längsrichtung der dritten Verlängerungskomponente (232) erstreckt, umfasst.

9. Kombiniertes Energieerzeugungssystem (1000), das Folgendes umfasst:
eine Gasturbine (1200), die konfiguriert ist, durch Verbrennen von Brennstoff eine Rotationskraft zu erzeugen;
einen Wärmerückgewinnungs-Dampfgenerator (140), der konfiguriert ist, unter Verwendung von Verbrennungsgas, das aus der Gasturbine (1200) ausgelassen wird, Wasser zu erhitzen, und einen Hochdruckabschnitt (H3), einen Mitteldruckabschnitt (H2) und einen Niederdruckabschnitt (H1), die verschiedene Druckpegel aufweisen, umfasst; und
eine Dampfturbine (1600), die Dampf verwendet, der durch den Wärmerückgewinnungs-Dampfgenerator (140) erhitzt wird,
wobei der Wärmerückgewinnungs-Dampfgenerator (140) mehrere Durchlaufwärmetauscher (150, 180) nach einem der vorhergehenden Ansprüche umfasst.

## Revendications

1. Échangeur de chaleur à passage unique (150, 180) comportant :
un empilement de tubes (156) comportant une pluralité de tubes (157) ;
une pluralité de têtes (153, 183) raccordées à l'empilement de tubes (156) et configurées pour recevoir de la vapeur chauffée ;
un module de raccords (201, 202, 204) configuré pour raccorder les tubes (157) et les têtes (153, 183) et comportant une pluralité de raccords de tubes (210, 220, 230) ;
un collecteur (151, 181) raccordé aux têtes (153, 183) et configuré pour recevoir de la vapeur chauffée ; et
une pluralité de tuyaux de liaison (152, 182) configurés pour raccorder les têtes (153, 183) et le collecteur (151, 181),
dans lequel le module de raccords (201, 202, 204) comporte un premier raccord de tube (210) et un deuxième raccord de tube (220) ayant différentes formes ;
**caractérisé en ce que** :
chacune des têtes (153) est un tuyau qui s'étend parallèlement au collecteur (151) et a les deux extrémités longitudinales bloquées, et
**en ce que** les têtes (153, 183) sont espacées à différentes distances du collecteur (151, 181).

2. Échangeur de chaleur à passage unique (150, 180) selon la revendication 1, dans lequel les têtes (153, 183) adjacentes l'une à l'autre dans une direction longitudinale du collecteur (151, 181) sont espacées à différentes distances du collecteur (151, 181).

3. Échangeur de chaleur à passage unique (150, 180) selon l'une quelconque des revendications précédentes, dans lequel :
le premier raccord de tube (210) comporte une première partie de raccordement (212) raccordée à des têtes associées parmi les têtes (153, 183), et le deuxième raccord de tube (220) comporte une deuxième partie de raccordement (221) raccordée à des têtes associées parmi les têtes (153, 183) ; et
la première partie de raccordement (212) a une longueur plus petite que la deuxième partie de raccordement (221).

4. Échangeur de chaleur à passage unique (150, 180) selon la revendication 3, dans lequel la première partie de raccordement (212) et la deuxième partie de raccordement (221) sont formées en parallèle.

5. Échangeur de chaleur à passage unique (150, 180) selon la revendication 3 ou 4, dans lequel le premier raccord de tube (210) comporte en outre une première partie d'extension (213) s'étendant dans une direction longitudinale des tuyaux de liaison (152, 182) à partir de la première partie de raccordement (212), une première partie intermédiaire (214) s'étendant dans une direction longitudinale de la première partie de raccordement à partir de la première partie d'extension (213), et une première partie d'embout (215) s'étendant dans une direction longitudinale de la première partie d'extension (213) à partir de la première partie intermédiaire (214).

6. Échangeur de chaleur à passage unique (150, 180) selon la revendication 3, 4 ou 5, dans lequel le deuxième raccord de tube (220) comporte en outre une deuxième partie d'embout (225) s'étendant dans la direction longitudinale des tuyaux de liaison (152, 182) à partir de la deuxième partie de raccordement (221).

7. Échangeur de chaleur à passage unique (150, 180) selon la revendication 3, 4, 5 ou 6, dans lequel :
le module de raccords (202) comporte en outre un troisième raccord de tube (230) ayant une forme différente du deuxième raccord de tube (220) ; et
le troisième raccord de tube (230) comporte une troisième partie de raccordement (231) raccordée à des têtes associées parmi les têtes (153, 183), et la troisième partie de raccordement (231) a une longueur plus grande que la deuxième partie de raccordement (221).

8. Échangeur de chaleur à passage unique (150, 180) selon la revendication 7, dans lequel le troisième raccord de tube (230) comporte en outre une troisième partie d'extension (232) s'étendant dans la direction longitudinale des tuyaux de liaison (152, 182) à partir de la troisième partie de raccordement (231), une partie inclinée (233) s'étendant en oblique à partir de la troisième partie d'extension (232), et une troisième partie d'embout (234) s'étendant dans la direction longitudinale de la troisième partie d'extension (232) à partir de la partie inclinée (233).

9. Système de production d'énergie combiné (1000) comportant :
une turbine à gaz (1200) configurée pour générer une force de rotation en brûlant un combustible ;
un générateur de vapeur à récupération de chaleur (140) configuré pour chauffer de l'eau en utilisant du gaz de combustion évacué de la turbine à gaz (1200) et comportant une section à haute pression (H3), une section à moyenne pression (H2) et une section à basse pression (H1) ayant différents niveaux de pression ; et
une turbine à vapeur (1600) utilisant de la vapeur chauffée par le générateur de vapeur à récupération de chaleur (140),
dans lequel le générateur de vapeur à récupération de chaleur (140) comporte une pluralité d'échangeurs de chaleur à passage unique (150, 180) selon l'une quelconque des revendications précédentes.
